# EUROPEAN PATENT SPECIFICATION

(11) **EP 4 247 697 B1**
(45) Date of publication and mention of the grant of the patent: **01.07.2026**
(21) Application number: 21720863.6
(22) Date of filing: 26.03.2021
(51) Int. Cl.: B62J 6/022, B62J 11/19, B62M 23/02, B62K 19/32

(54) **A VEHICLE**
FAHRZEUG
VÉHICULE

(30) Priority: 18.11.2020 IN 202041050089
(43) Date of publication of application: 27.09.2023
(73) Proprietor: TVS Motor Company Limited, 600006 Chennai (IN)
(72) Inventor: LAKSHMANAN, Subramanian, Chennai, 600 006 (IN); ANAND, Motilal Patil, Chennai, 600 006 (IN); KANDREGULA, Srinivasa Rao, Chennai, 600 006 (IN)
(74) Representative: Patentanwaltskanzlei Matschnig & Forsthuber OG
(86) International application number: PCT/IN2021/050314
(87) International publication number: WO 2022/107154

(56) References cited:
- EP-A1- 2 769 903
- EP-A1- 3 581 786
- WO-A1-2012/029687
- WO-A1-2020/141542
- WO-A2-2018/056819
- JP-B2- 5 145 198

## Description

### TECHNICAL FIELD

The present subject matter generally relates to a vehicle. The present subject matter specifically but not exclusively relates to mounting of an ISG controller in a saddle type vehicle.

### BACKGROUND

A vehicle with an integrated starter-generator (ISG) system replaces separate use of a starter and an alternator and integrates both of them into a single electric device. The ISG system provides better fuel economy, electrical generation capacity and reduced emissions. ISG system also eliminates the requirement of a separate starter which remains in a passive state once an engine starts generating power and ISG system also provides fast control of a generator voltage during load dumps in order to improve the distribution power quality.

The document EP 2 769 903 A1 discloses a vehicle according to the preamble of claim 1.

### BRIEF DESCRIPTION OF THE DRAWINGS

The detailed description is described with reference to an embodiment of a scooter type saddle vehicle along with the accompanying figures. The same numbers are used throughout the drawings to reference like features and components.
**Fig. 1** illustrates a right-side view of an exemplary saddle-ride vehicle, in accordance with the present subject matter.
**Fig. 2** illustrates the main frame of the vehicle, in accordance with the present subject matter.
**Fig. 3** illustrates an enlarged side view of the front portion of the vehicle, in accordance with the present subject matter.
**Fig. 4** illustrates an enlarged bottom to top view of the front portion of the vehicle, in accordance with the present subject matter.
**Fig. 5** illustrates a side view of the ISG controller mounting, in accordance with the present subject matter.
**Fig. 6** illustrates main frame of the vehicle with an exploded view of the mounting of the ISG controller, in accordance with the present subject matter.
**Fig. 7** illustrates a top view of the vehicle, in accordance with the present subject matter.

### DETAILED DESCRIPTION

Typical ISG system comprises of an ISG controller connected to a rectifier which makes the ISG system bulky thereby necessitating more space for packaging within a layout of a compact saddle type vehicle. In an known art, the ISG controller is located on an air cleaner of a two-wheeled vehicle like a motorcycle and scooter. Such configuration can lead to compromise on the total volume of the air cleaner since the ISG system need to be accommodated, typically by modifying the shape and size of the air cleaner. In another known art, the ISG controller is placed on a rear portion of the vehicle and below a seat of the vehicle. This can increase the load on the rear wheel leading to unequal load distribution in the vehicle. Further, in such design the bulky ISG controller consumes a space under the seat and a utility box volume gets traded off. ISG controller can also be integrated with an EFI (Electronic fuel injection) controller in a single packaging which further increases the size and weight of the integrated ISG controller and EFI controller.

In a compact saddle type vehicle like a motorcycle, typically style panels are mounted in proximity to a frame hence it becomes difficult to find a location for an additional component like an ISG controller and an EFI controller to be located between the style panel and the frame of the vehicle. Other option is to provide the ISG controller below a rider's seat, however if the ISG controller is configured below rider's seat in an enclosed space, it adversely impacts the airflow for cooling which affects the performance of the ISG controller since ISG controller is a heat generating device.

During the operation of the ISG Controller, the ISG controller may heat up to 70 to 80 degrees Celsius. Further, if the ISG Controller is disposed immediately behind an engine of the vehicle, the ISG controller heats up very quickly and this affects the functioning of the ISG controller. The heat radiated by the engine is directed towards ISG controller thus making the cooling of ISG controller less effective. Due to accumulation of heat, there is a probability of malfunction of the ISG controller potentially causing accident. Additionally, the side panel, such as a cover frame, which covers the vehicle from the side portion is sometimes provided with a cut out to dissipate the heat. However, this channels the hot air towards the rider's leg which causes great deal of discomfort to the rider.

Also, engine may be located below a seat assembly in a scooter type vehicle in which, providing ISG controller and EFI controller below the seat assembly demands additional space. A utility box is typically provided immediately below the seat assembly to store any article. This utility space gets compromised if both ISG controller and EFI controller are to be disposed below the utility box. To compensate for the loss in utility space, it is not desirable to shift the utility box upwards as it adversely affects the seating height as well as ground reach of the rider. Therefore, often the width of the utility box is increased to compensate and achieve desired volumetric space, albeit at a compromise of increase in lateral width of the vehicle. Undesirable increase in width of the vehicle, comprising body panels or cover frame, not only makes vehicle look bulkier but also adds to difficulty in manoeuvring in traffic. Additionally, such design deviates from a comfortable anthropometric seating position of the rider leading to stress and fatigue for the rider. Therefore, with above mentioned arrangements and layouts, the rider comfort may get adversely affected due to factors like exposure to hot air, seating difficulty due to wide cover frame, low utility box volume and other ancillary issues such as height of the seat may increase due to inclusion of the ISG controller and EFI controller or thickness of the foam is compromised in order to compensate the height of the seat.

Therefore, it becomes necessary to provide the ISG controller in the vehicle such that ample of air flows through the ISG controller to maintain the temperature of the ISG controller below certain level without causing discomfort to the rider of the vehicle. Also, the placement of the ISG controller along with the EFI controller in the vehicle should not lead to compromise on the ergonomic parameters like frame size and frame width, seat height from the ground and volume of the utility box of the vehicle which would defeat the purpose of achieving rider comfort. Therefore, there is a need of an improved layout of a compact saddle type vehicle with an ISG controller which overcomes all of the above stated problems and other problems from known art.

Hence, As per an object of the present subject matter, an improved vehicle layout with an electric device such as an integrated controller assembly is disclosed. As per the present invention, said integrated controller assembly, comprising an ISG controller and an EFI controller, is mounted on a front portion of the vehicle wherein the integrated controller assembly is mounted below a headlight assembly of the vehicle. In a not claimed example, the electric device can also be charging port for charging a power unit such as a battery for easy access during charging of the battery. The front portion of the vehicle includes the headlight assembly, a front fork assembly or front suspension, a front wheel, main frame and a head tube. By configuring and securing the integrated controller assembly under the head light assembly, the ISG controller remains protected from direct contact with the sunlight thereby eliminating heating. The ISG controller is a heat generating device and it becomes necessary that the ISG controller gets proper air flow and remains away from the direct sunlight, which can further increase the temperature of the ISG controller. As per an embodiment, the ISG controller and the EFI controller may be integrated into one unit or may be separate controller unit capable of being coupled with each other or disposed independently.

Another embodiment of the present subject matter provides a vehicle wherein the integrated controller assembly is mounted on a front suspension by mounting the integrated controller assembly on a front suspension bracket through fastening means.

Yet another embodiment of the present subject matter provides a vehicle in which the integrated controller assembly is inclined at a predetermined angle with respect to an axis (AA') of the front suspension such that the inclination of the ISG controller is towards the front suspension. This inclination of the integrated controller assembly prevents any deposition of water owing to rain, wash etc. As per another aspect of present invention, the integrated controller assembly is configured with cooling fins which, as per the present embodiment, faces in the downward direction thereby achieving better exposure of the controller to the air flow. This improved layout thereby enables speedy elimination of heat generated by the ISG controller and facilitates better cooling of the ISG controller. Cooling fins of the ISG controller allows heat exchange. Therefore, the cooling fins of the ISG controller do not face towards the head lamp assembly as it would hamper the cooling process by blocking the air flow.

Another embodiment of the present subject matter provides a vehicle with the ISG controller which is mounted a front portion of the vehicle whereas the EFI controller is mounted in a rear portion of the vehicle. The EFI controller is mounted between a pair of rear tubes supporting a seat assembly and the ISG controller is mounted below the headlamp assembly.

Still another embodiment of the present subject matter provides a vehicle in which the ISG controller is covered by a cover structure which protects the ISG controller from external matters like dust and water. Also, the cover structure provides an improved aesthetic feature. The embodiments of the present invention will now be described in detail with reference to an embodiment in a saddle type two wheeled vehicle along with the accompanying drawings. The present subject matter is further described with reference to accompanying figures. It should be noted that the description and figures merely illustrate principles of the present subject matter. The present invention is defined by the appended claims.

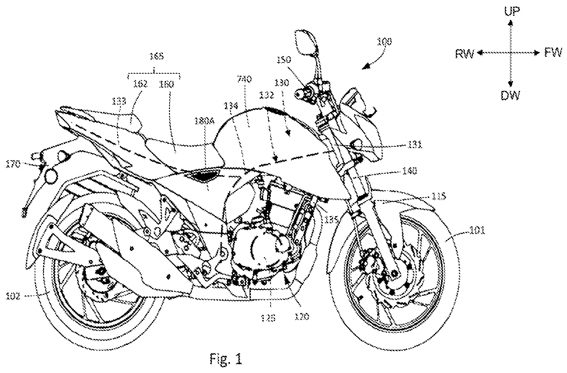

Fig. 1 illustrates a right-side view of an exemplary saddle-ride vehicle (100) in accordance with the present subject matter. The saddle-ride vehicle (referred to as 'vehicle' for brevity) (100) includes a main frame structure (130) shown schematically with dotted lines, that acts a structural member of the vehicle (100). Further, the vehicle (100) comprises a front wheel (101) and a rear wheel (102). The present subject matter is not limited to the motor vehicle with two-wheels, as it is considered only for ease of explanation, and it is applicable for any saddle-ride vehicle. The main frame structure (130) includes a head tube (131), a main tube (132) and one or more rear tube(s) (133). In accordance with the current embodiment, the head tube (131) is disposed in a front portion of the vehicle (100). The main tube (132) extends rearward from the head tube (131) and the main tube (132) then forms a bending portion (134). Subsequent to the bending portion (134), the main tube (132) extends substantially downward. The one or more rear tube(s) (133) extend rearward from the bending portion (134). In one implementation, main tube (132) is a single tubular member. In another implementation, the main tube (132) may be formed by two or more tubes that are contiguously connected to form a single structure. The one or more rear tube(s) (133) has a front end connected to the bending portion (134). The one or more rear tube(s) (133) that extend inclinedly rearward may further comprises one or more bends in order to adapt to a layout of the vehicle (100). In an embodiment having two rear tubes, a front portion (not shown) thereof converges towards the bending portion (134) and the two rear tubes, towards the rearward direction, are spaced apart and are connected together using one or more cross-member(s) (not shown).

The vehicle (100) comprises a steering system (not shown) and a front suspension unit (140), which is part of the steering system. The steering system is rotatably movable with respect to the head tube (131). A handlebar assembly (150) is connected to the steering system for manoeuvring the vehicle (100). The front suspension unit (140) rotatably supports the front wheel (101). A power unit (120) is fixedly mounted to the main frame structuremain frame structure (130). In one embodiment, the main frame structure (130) includes a down tube (135), which extends obliquely downward from the head tube (131). The power unit (120) is fixedly supported by the main tube (132) and the down tube (135). The power unit (120), which is an internal combustion (IC) engine, is provided with an electrical machine (125) (shown in dotted line). In one implementation, the electrical machine (125) is mounted to a crankshaft (not shown) of the power unit (120) to rotate therewith. The electrical machine (125) is preferably, but not limited, to an integrated starter generator (ISG). The electrical machine (125) is configured to perform starting operation of the IC engine, charge a battery (not shown) of the vehicle (100) during operation of the IC engine, and even assist the IC engine. The power unit (120) is coupled to the rear wheel (102) through a transmission system (not shown). In the one implementation, the second wheel (102) is rotatably supported by a swing arm (not shown).

The vehicle (100) includes a fuel tank (740) that is mounted to the main tube (132) and is disposed rearward to the handlebar assembly (150). Further, a seat assembly (165) is disposed rearward to the fuel tank (740). The seat assembly (165), in one implementation, in an elongated structure, in longitudinal direction F-R, and is supported by the rear tubes (133). In another implementation, as depicted in Fig. 1, the seat assembly (165) is formed by a rider-seat (160) and a pillion-seat (162), which is disposed posterior to the rider-seat (160). Further, the vehicle (100) includes a front-fender (115) mounted to the front suspension unit (140) and configured to cover at least a portion of the first wheel (101). A rear-fender (170) is suspended below the seat assembly (165). The rear-fender (175) is configured to block splashing of water or dirt from the rear wheel (102) on to passers-by and other vehicles.

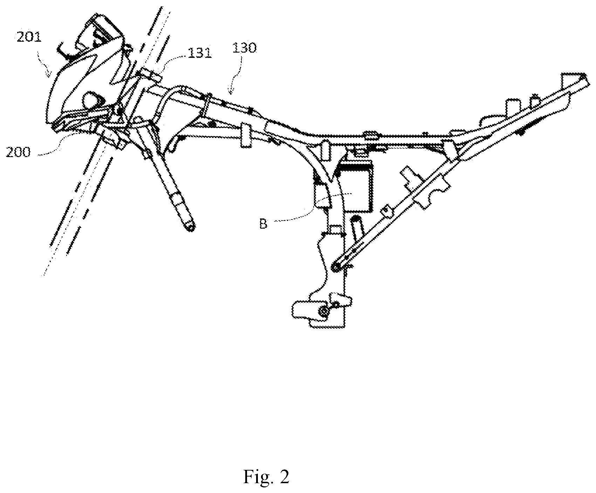

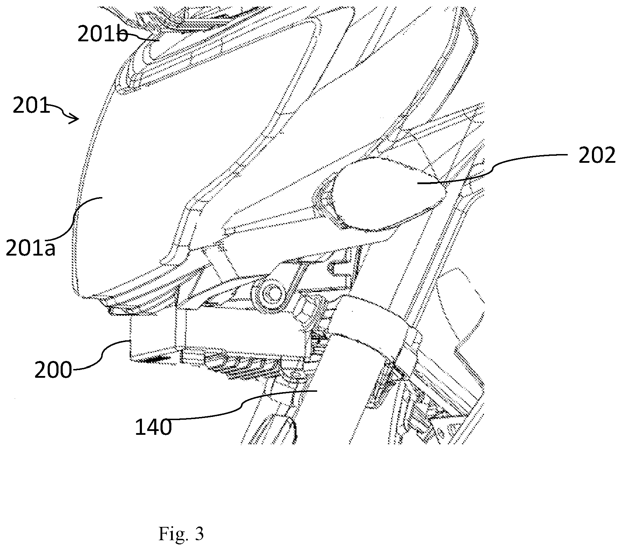

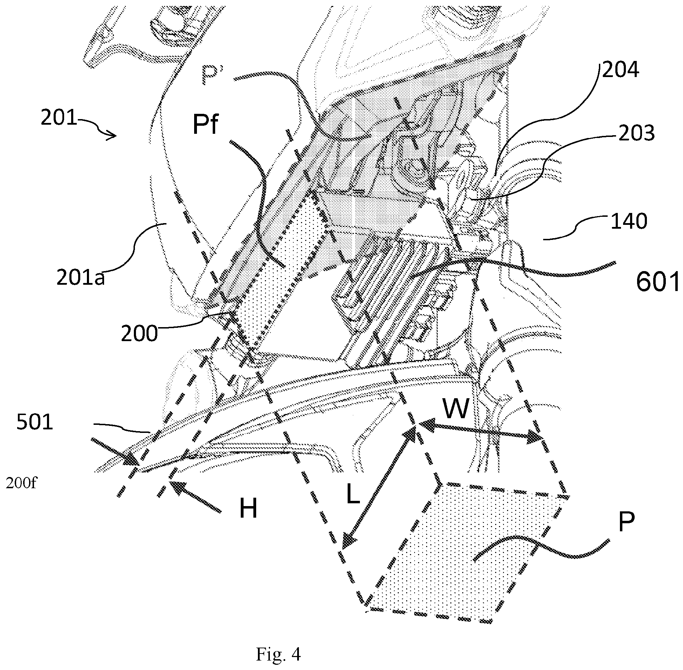

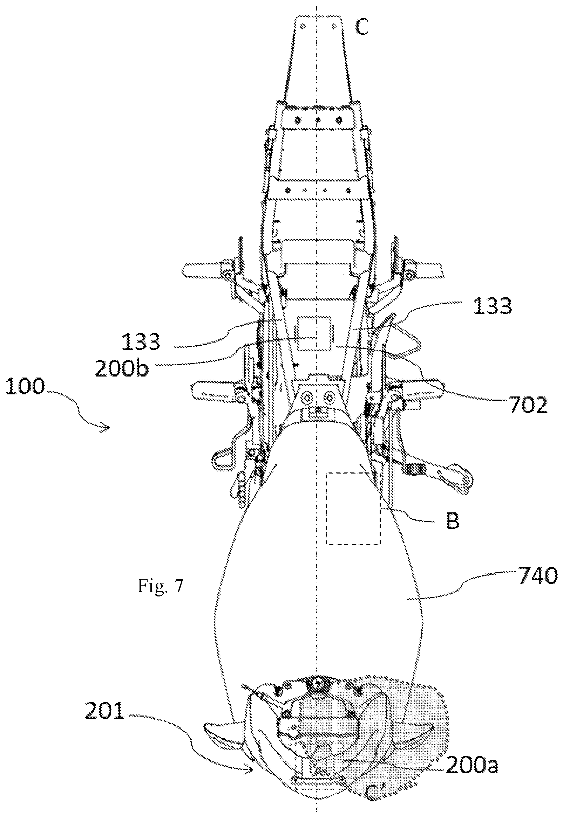

**Fig. 2** illustrates left side view of the main frame (130) of the vehicle (100). An integrated controller assembly (200) is securely disposed below a head lamp assembly (201). As per another embodiment, the integrated controller assembly (200) comprises of two controllers viz. an ISG controller (200a) and an EFI controller (200b). As per an embodiment, the ISG controller (200a) is disposed below the head lamp assembly (201) whereas the EFI controller (200b) is disposed in a region below the seat assembly. (Refer fig. 7). As per an alternate embodiment not shown, the EFI controller (200b) is disposed below the seat assembly (165) and the ISG controller (200a) is disposed below the head lamp assembly. For brevity, henceforth the word controller has been interchangeably used to refer either the integrated controller (200) or one of the ISG controller (200a) and EFI controller (200b) A head lamp assembly (201) is rotatably supported by the head tube (131). As per an embodiment, the controller (200, 200a, 200b) is disposed in such a manner that the controller (200, 200a, 200b) remains within the projected periphery of the headlamp assembly (201) when projected from a top view of the vehicle. Disposing the controller (200) within the projected periphery of the headlamp assembly (201) ensures that the controller (200, 200a, 200b) does not protrude outside circumferential periphery of the headlamp assembly (201). The headlamp assembly (201) keeps the Controller (200, 200a, 200b) protected from environmental factors like direct water entry and also protects from exposure to direct sunlight which can heat up the controller (200, 200a, 200b). Exposing the controller to sunlight leads to undesirable rise in temperature of the controller beyond permissible limits which is detrimental to the error free functioning of the controller. Further, disposing the controller (200, 200a, 200b) below a head lamp assembly (201) enables an open ventilated space for the controller (200, 200a, 200b) with adequate protection which ensures that the hot air coming out of the controller (200, 200a, 200b) does not get trapped locally and recirculated in this region. The controller and its vicinity are so configured so as to eliminate any obstruction to ventilation and air cooling thereby avoiding thermal failure of the controller and any consequential fire hazards. In another embodiment, the controller assembly (200, 200a, 200b) is disposed adjacent to the headlamp assembly (201) on either of a right or a left side (not shown) of the headlamp assembly (201) in vicinity of the turn signal lamps (202) shown in Fig 3. This embodiment increases the lateral width of the headlamp assembly but is still within the maximum lateral width of vehicle thereby not impacting the overall width of the vehicle. The controller may be covered by one or more of the covers of the head lamp assembly to protect it from exposure to sunlight while enabling ventilation cooling air to flow from one or more opening at the front side. Cooling fins 601 (shown in Fig 4) on the controller may be disposed on the lateral outward facing side of the controller for effective cooling. As per an additional aspect, the ISG controller 200a and EFI controller 200b may be disposed on laterally opposite side of the headlamp assembly which achieves mass distribution balance on the headlamp assembly and thereby a balanced steering system eliminating adverse inertia effects. As per and alternate embodiment, one lateral side may be configured with a controller (200, 200a, 200b) while the other side may be balanced by disposing any of an electrical device like a relay unit etc. The headlamp cover of the headlamp assembly (201) is provided with a number plate bracket (not shown). The bracket can be fastened into a threaded cavity to fasten the number plate bracket.

**Fig. 3** illustrates an enlarged left side perspective view of the front portion of the vehicle (100) comprising the headlamp assembly (201) and the front suspension unit (140). The headlamp assembly (201) comprises of a head lamp unit (201a) and a headlamp cover (201b). A pair of turn signal lamps (202) mounted on a right side and a left side of the head lamp assembly (201).

**Fig. 4** illustrates enlarged bottom perspective view of the front portion of the vehicle (100) comprising the headlamp assembly (201), when seen from the bottom. The controller (200, 200a, 200b) is located between the headlamp assembly (201) and the front wheel (101). The front wheel (101) is covered by a front fender (501). The controller (200, 200a, 200b) is removably mounted on a front suspension unit (140) through front suspension bracket (204) and using one or more fastening means (203), which enables the fastening of the ISG controller (200) on to the front suspension bracket (204). As per an aspect of the present invention, the controller (200, 200a, 200b) is a substantially rectangular box shaped unit with its height (H) or thickness being smaller than the length (L) and width (W) dimension of the controller. As per an aspect of the present invention, the length dimension L is laterally oriented with reference to the lateral direction of the vehicle and the larger surface area C of the controller determined by L X W is disposed facing in an upward-downward orientation. As per an aspect, the projected area P = L x W of the controller is substantially equal or smaller than a projected area (schematically represented by P') of the headlamp assembly when projected from a top view so as to eliminate any undesirable exposure to sunlight. As per another aspect of the present invention, the periphery of the projected area P' of the head lamp assembly encompasses the projected area P of the controller (20, 200a, 200b). As per another aspect of the present invention, the forward projected area Pf of the controller determined by H x L is less than or equal to half of the projected area C of the controller i.e. Pf < = 0.5 x P so as the achieve a compact packaging of the controller below the head lamp assembly without compromising on the operating layout space of the vehicle between the front fender and the chin region of the headlamp unit. Also, as per this configuration, the frontal area of the control receives ample ventilated air cooling from forward impacting air during riding which is further augmented by intentionally disposing cooling fins 601 on the lower side of the controller. As a result, the cooling air flows which can get obstructed from the top side of the controller owing to the presence of the head lamp assembly gets routed to flow underneath the controller (200, 200a, 200b) thereby enhancing cooling of the controller and achieving safe as well as error free functioning of the controller.

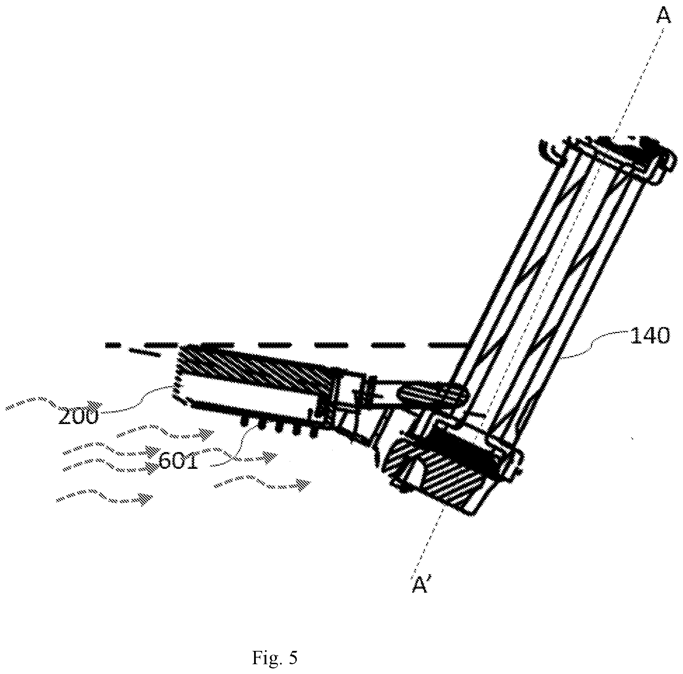

In a scooter type vehicle, as per an embodiment the controller (200, 200a, 200b) is mounted on the front suspension bracket (204) such that the wider surface P of the controller (200, 200a, 200b) is substantially parallel to an axis (AA') (shown in Fig 5) of the front suspension unit (140) and cooling fins (601) are facing towards a front panel (not disclosed) to receive air flow from a cut out (not shown) provided on the front panel.

**Fig. 5** illustrates a side view of mounting of the controller (200, 200a, 200b). The controller (200, 200a, 200b) is mounted on the front suspension unit (140) with a predetermined angle with respect to an axis (AA') of the front suspension unit (140). The axis (AA') is parallel to stroking axis of the front suspension unit (140) i.e. an axis along which the suspension reciprocates. The integrated controller assembly (200) is disposed inclined towards the front suspension unit (140. This rearward inclination of the controller (200, 200a, 200b) towards the front suspension unit (140) prevents any accumulation of water droplets on the surface of the controller (200, 200a, 200b). The controller (200, 200a, 200b) is generally provided with one or more cooling fins (601) to allow cooling of the controller (200, 200a, 200b) and dissipate the heat into the atmosphere. As per an embodiment, the controller (200, 200a 200b) is mounted in such a manner that a cable coupler connecting the controller (200, 200a, 200b) to a vehicle control unit (not shown) is routed rearward of the vehicle (100) passing through the head tube (131). This eliminates unnecessary twisting and turning of the cables emerging out from the cable coupler of the controller (200, 200a, 200b) and also keeps the cables away from the direct contact with the heat coming out of the cooling fins (601) of the controller (200, 200a, 200b).

Further, integrated controller assembly (200) is inclined at a predetermined angle such that frontal facing area (Pf) is oriented in an upwardly configuration which enables the cooling fins (601) to face the incoming flow of air without any obstruction when the vehicle is in a running condition.

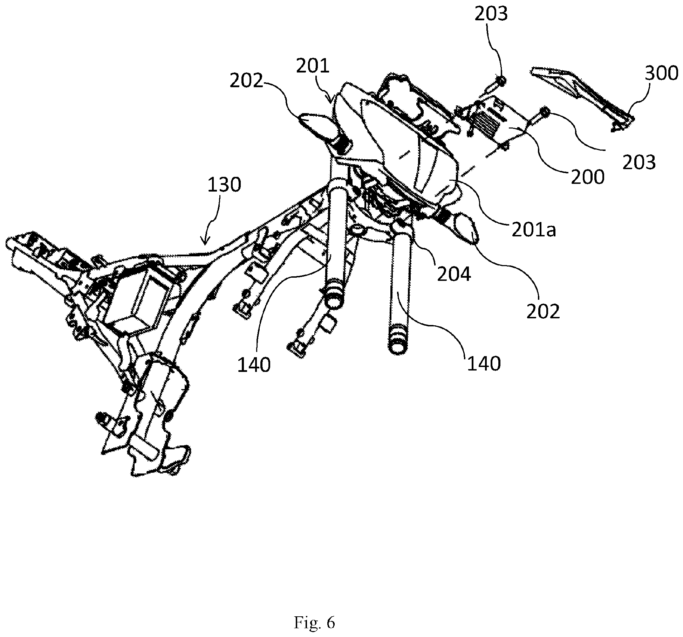

**Fig. 6** illustrates bottom side perspective view of the main frame (130) assembled in the vehicle (100) with an exploded view of the mounting of the integrated controller assembly (200) and many parts omitted for clarity. A cover structure (300) covers the controller (200, 200a, 200b) from any direct contact with the dust or water. The cover structure (300) is shaped in such as manner that the cooling fins (601) of the controller (200, 200a, 200b) remains exposed to the incoming air flow during riding condition of the vehicle (100).

**Fig. 7** illustrates a top view of the vehicle (100). In this embodiment, the ISG controller (200a) and the EFI controller (200b) are mounted at two separate locations. The ISG controller (200a) is mounted in a front portion of the vehicle (100) whereas the EFI controller (200b) is mounted in a rear portion of the vehicle (100). The ISG controller (200a) is mounted on the front suspension unit (140) whereas the EFI controller (200b) is mounted below the seat assembly (165) and in between the rear tubes (133) which support the seat assembly (165). As per an embodiment, the EFI controller (200b) is securely disposed on an air cleaner (702).

Further, a central axis (CC') of the vehicle (100) passes through the centre of gravity of the vehicle (100). The central axis (CC') divides the vehicle (100) into two equal lateral halves. Ideally, for good handling performance of the vehicle, the centre of gravity of the vehicle (100) is located close to the engine assembly of the vehicle (100). The components in the vehicle (100) need to be distributed in such a manner that maximum weight should lie along the central axis (CC') and distributed around the center of gravity of the vehicle (100). The ISG controller (220a) lies along the central axis (CC'). The EFI controller (200b) and a battery (B) is located on the left and right side, respectively, of the central axis (CC') The positioning of the EFI controller (200b) and the battery (B) is width wise is balanced around the central axis (CC') passing substantially in close proximity to the centre of gravity of the vehicle (100).

Further, the ISG controller (200a) and the EFI controller (200b) are located equidistant from the battery (B) which helps in optimal wiring harness and thus reduced transmission losses, signal errors, ease of assembly as well as ease of service of wiring harness in addition to achieving a compact layout. As per an aspect of the present embodiment, the wiring harness distance between the ISG controller (200a) and an ISG machine 125 (shown in Fig 1) is equal to wiring harness distance between the EFI controller (200b) and an power unit 120 (shown in Fig 1). As per another embodiment, one or more of the controllers (200, 200a, 200b) and the battery (B) at least partially overlap with the central axis (CC').

### LIST OF REFERENCE SIGNS

vehicle (100)
main frame (130)
front wheel (101)
rear wheel (102)
head tube (131)
main tube (132)
rear tube (133)
bending portion (134)
power unit (120)
down tube (135)
fuel tank (740)
handlebar assembly (150)
seat assembly (165)
rider-seat (160)
pillion-seat (162)
front-fender (115)
front suspension unit (140)
rear-fender (175)
integrated controller assembly (200)
head lamp assembly (201)
front suspension unit (140)
head lamp unit (201a)
headlamp cover (201b)
turn signal lamps (202)
front fender (501)
front suspension bracket (204)
cooling fins (601)
fastening means (203)
axis (AA')
ISG controller (200a)
EFI controller (200b)
air cleaner (702)
central axis (CC')
Battery (B)

## Claims

1. A vehicle (100) comprising:
a main frame (130), said main frame (130) comprising a head tube (131), which rotatably supports a headlamp assembly (201);
an electric device, which is located between said headlamp assembly (201) and a front wheel (101),
wherein said electric device is a controller (200, 200a, 200b),
wherein said controller (200, 200a, 200b) is one of an integrated controller assembly (200), an ISG controller (200a), and an EFI controller (200b);
**characterised in that**
said integrated controller assembly (200) comprises an ISG controller (200a) and an EFI controller (200b) disposed within a periphery of said headlamp assembly (201), said controller (200, 200a, 200b) having a length (L), said length (L) being oriented laterally in a lateral direction of the vehicle (100), and a larger surface area (C) of said controller (200, 200a, 200b) being determined by a projected area (P), said larger surface area (C) of said controller being disposed facing in an upward-downward orientation of the vehicle (100).

2. The vehicle (100) as claimed in claim 1, wherein said electric device is mounted on a front suspension unit (140) through a front suspension bracket (204);
wherein said front suspension unit (140) is fixedly attached to said head tube (131) of said main frame (130); and
wherein said front suspension unit (140) is configured to steerably support the front wheel (101).

3. The vehicle (100) as claimed in claim 1, wherein
said controller (200, 200a, 200b) has one or more cooling fins (601).

4. The vehicle (100) as claimed in claim 1, wherein said controller (200, 200a, 200b) is disposed adjacent to said headlamp assembly (201).

5. The vehicle (100) as claimed in claim 3, wherein said ISG controller (200a) is disposed on a left-hand side of said headlamp assembly (201) and said EFI controller (200b) is disposed on a right-hand side of said headlamp assembly (201); and wherein said ISG controller (200a) and said EFI controller (200b) are disposed in vicinity of a turn signal lamp (202).

6. The vehicle (100) as claimed in claim 1, wherein said controller (200, 200a, 200b) is covered by a cover structure (300) of the head lamp assembly (201).

7. The vehicle (100) as claimed in claim 1, wherein said controller (200, 200a, 200b) is disposed on one lateral side of said headlamp assembly (201), and a relay device is disposed on the other lateral side of said headlamp assembly (201).

8. The vehicle (100) as claimed in claim 3, wherein
said controller (200, 200a, 200b) has a rectangular box shape with a height (H) less than a length (L) and a width (W) of said integrated controller assembly (200).

9. The vehicle (100) as claimed in claim 3, wherein said controller (200, 200a, 200b) has a vertically projected area (P) equal or smaller than a headlamp projected area (P') of said headlamp assembly (201),
wherein a periphery of said headlamp projected area (P') encompasses said projected area (P) of said controller.

10. The vehicle (100) as claimed in claim 3, wherein said one or more cooling fins (601) are located in a downward direction.

11. The vehicle (100) as claimed in claim 3, wherein said controller (200, 200a, 200b) is configured to be inclined at a predetermined angle with respect to an axis (AA') of a front suspension unit (140);
wherein said integrated controller assembly (200) is mounted on a front suspension bracket (204);
wherein said larger surface area of the controller (200, 200a, 200b) is substantially parallel to said axis (AA') of said front suspension unit (140); and
wherein said one or more cooling fins (601) are facing towards a front panel.

12. The vehicle (100) as claimed in claim 3, wherein said controller (200, 200a, 200b) is connected to a vehicle control unit through a coupler; and wherein said coupler is routed in a rearward direction of the vehicle (100) passing through said head tube (131).

13. The vehicle (100) as claimed in claim 3, wherein said controller (200, 200a, 200b) is covered with a cover structure (300).

14. The vehicle (100) as claimed in claim 1, wherein:
said controller (200, 200a, 200b) includes an ISG controller (200a) and an EFI controller (200b), wherein said ISG controller (200a) being disposed between said headlamp assembly (201) and the front wheel (101), said EFI controller (200b) being located below a seat assembly (165) and between a pair of frame rear tubes (133) and being adapted to be disposed on an air cleaner (133).

15. The vehicle (100) as claimed in claim 14, wherein said ISG controller (200a) is located along a central axis (CC') of the vehicle (100), and/or
wherein said EFI controller (200b) and a battery (B) are located in a width wise lateral direction and in proximity of a central axis (CC') of the vehicle (100).

16. The vehicle (100) as claimed in claim 14, wherein said ISG controller (200a) and said EFI controller (200b) are located equidistant from the battery (B), and/or partially overlap with a central axis (CC') of the vehicle (100).

17. The vehicle (100) as claimed in claim 14, wherein the vehicle (100) is provided with an ISG machine (125); and wherein a wiring harness distance between said ISG controller (200a) and said ISG machine (125) is equal to wiring harness distance between said EFI controller (200b) and an EFI power unit (120).

## Patentansprüche

1. Fahrzeug (100), aufweisend:
einen Hauptrahmen (130), wobei der Hauptrahmen (130) ein Lenkrohr (131) aufweist, das eine Scheinwerferbaugruppe (201) drehbar gelagert hält;
eine elektrische Vorrichtung, die sich zwischen der Scheinwerferbaugruppe (201) und einem Vorderrad (101) befindet, wobei die elektrische Vorrichtung eine Steuerung (200, 200a, 200b) ist,
wobei die Steuerung (200, 200a, 200b) eines aus einer integrierten Steuerungsbaugruppe (200), einer ISG-Steuerung (200a) und einer EFI-Steuerung (200b) ist;
**dadurch gekennzeichnet, dass**
die integrierte Steuereinheit (200) eine ISG-Steuerung (200a) und eine EFI-Steuerung (200b) umfasst, die innerhalb einer Peripherie der Scheinwerferbaugruppe (201) angeordnet sind, wobei die Steuerung (200, 200a, 200b) eine Länge (L) hat, welche Länge (L) seitlich in einer seitlichen Richtung des Fahrzeugs (100) ausgerichtet ist, und eine größere Oberfläche (C) der Steuerung (200, 200a, 200b) durch eine projizierte Fläche (P) bestimmt wird, wobei die größere Oberfläche (C) der Steuerung zugewandt in einer Aufwärts-Abwärts-Richtung des Fahrzeugs (100) liegt.

2. Fahrzeug (100) nach Anspruch 1, wobei die elektrische Vorrichtung über eine vordere Aufhängungshalterung (204) an einer vorderen Aufhängungseinheit (140) angebracht ist;
wobei die vordere Aufhängungseinheit (140) an dem Lenkrohr (131) des Hauptrahmens (130) fixiert ist; und
wobei die vordere Aufhängungseinheit (140) ausgebildet ist, das Vorderrad (101) lenkbar zu halten.

3. Fahrzeug (100) nach Anspruch 1, wobei
die Steuereinheit (200, 200a, 200b) einen oder mehrere Kühlrippen (601) aufweist.

4. Fahrzeug (100) nach Anspruch 1, wobei die Steuereinheit (200, 200a, 200b) zu der Scheinwerferbaugruppe (201) benachbart angeordnet ist.

5. Fahrzeug (100) nach Anspruch 3, wobei die ISG-Steuerung (200a) auf einer linken Seite der Scheinwerferbaugruppe (201) angeordnet ist und die EFI-Steuerung (200b) auf einer rechten Seite der Scheinwerferbaugruppe (201) angeordnet ist; und wobei die ISG-Steuerung (200a) und die EFI-Steuerung (200b) in der Nähe einer Blinkeranzeigelampe (202) angeordnet sind.

6. Fahrzeug (100) nach Anspruch 1, wobei die Steuerung (200, 200a, 200b) von einer Abdeckkonstruktion (300) der Scheinwerferbaugruppe (201) abgedeckt ist.

7. Fahrzeug (100) nach Anspruch 1, wobei die Steuerung (200, 200a, 200b) auf einer Seite der Scheinwerferbaugruppe (201) angeordnet ist und eine Relaisvorrichtung auf der anderen Seite der Scheinwerferbaugruppe (201) angeordnet ist.

8. Fahrzeug (100) nach Anspruch 3, wobei die Steuereinheit (200, 200a, 200b) die Form eines rechteckigen Kastens mit einer Höhe (H) hat, die kleiner ist als die Länge (L) und die Breite (W) der integrierten Steuereinheit (200).

9. Fahrzeug (100) nach Anspruch 3, wobei die Steuereinheit (200, 200a, 200b) eine vertikal projizierte Fläche (P) hat, die gleich oder kleiner ist als eine Scheinwerfer-Projektionsfläche (P') der Scheinwerferbaugruppe (201),
wobei eine Peripherie der Scheinwerfer-Projektionsfläche (P') die Projektionsfläche (P) der Steuereinheit beinhaltet.

10. Fahrzeug (100) nach Anspruch 3, wobei die eine oder mehreren Kühlrippen (601) in einer nach unten gerichteten Richtung befindlich sind.

11. Fahrzeug (100) nach Anspruch 3, wobei die Steuereinheit (200, 200a, 200b) dazu eingerichtet ist, in einem vorbestimmten Winkel in Bezug auf eine Achse (AA') einer vorderen Aufhängungseinheit (140) geneigt zu sein;
wobei die integrierte Steuereinheit (200) auf einer vorderen Aufhängungshalterung (204) angebracht ist,
wobei die größere Oberfläche der Steuereinheit (200, 200a, 200b) im Wesentlichen parallel zu der Achse (AA') der vorderen Aufhängungseinheit (140) ist, und
wobei die eine oder mehreren Kühlrippen (601) einer Frontverkleidung zugewandt sind.

12. Fahrzeug (100) nach Anspruch 3, wobei die Steuereinheit (200, 200a, 200b) über einen Koppler mit einer Fahrzeugsteuereinheit verbunden ist; und wobei der Koppler in Richtung nach hinten des Fahrzeugs (100) verläuft und dabei das Steuerrohr (131) durchquert.

13. Fahrzeug (100) nach Anspruch 3, wobei die Steuereinheit (200, 200a, 200b) mit einer Abdeckkonstruktion (300) abgedeckt ist.

14. Fahrzeug (100) nach Anspruch 1, wobei:
die Steuereinheit (200, 200a, 200b) eine ISG-Steuereinheit (200a) und eine EFI-Steuereinheit (200b) beinhaltet, wobei die ISG-Steuereinheit (200a) zwischen der Scheinwerferbaugruppe (201) und dem Vorderrad (101) angeordnet ist, wobei die EFI-Steuerung (200b) unterhalb einer Sitzbaugruppe (165) und zwischen einem Paar hinterer Rahmenrohre (133) angeordnet ist und auf einem Luftfilter (133) platzierbar ausgelegt ist.

15. Fahrzeug (100) nach Anspruch 14, wobei die ISG-Steuerung (200a) entlang einer Mittelachse (CC') des Fahrzeugs (100) befindlich ist, und/oder
wobei die EFI-Steuerung (200b) und eine Batterie (B) in einer seitlichen Querrichtung und in der Nähe einer Mittelachse (CC') des Fahrzeugs (100) angeordnet sind.

16. Fahrzeug (100) nach Anspruch 14, wobei die ISG-Steuerung (200a) und die EFI-Steuerung (200b) in gleichem Abstand zur Batterie (B) angeordnet sind und/oder sich teilweise mit einer Mittelachse (CC') des Fahrzeugs (100) überschneiden.

17. Fahrzeug (100) nach Anspruch 14, wobei das Fahrzeug (100) mit einer ISG-Maschine (125) ausgestattet ist; und wobei ein Kabelbaumabstand zwischen der ISG-Steuerung (200a) und der ISG-Maschine (125) gleich dem Kabelbaumabstand zwischen der EFI-Steuerung (200b) und einer EFI-Antriebseinheit (120) ist.

## Revendications

1. Véhicule (100) comportant :
un cadre principal (130), ledit cadre principal (130) comprenant un tube de direction (131) qui supporte de manière rotative un ensemble de phare (201) ;
un dispositif électrique, qui est situé entre ledit ensemble de phare (201) et une roue avant (101),
dans lequel ledit dispositif électrique est un contrôleur (200, 200a, 200b),
ledit contrôleur (200, 200a, 200b) étant l'un d'un ensemble de contrôleur intégré (200), d'un contrôleur ISG (200a) et d'un contrôleur EFI (200b) ;
**caractérisé en ce que**
ledit ensemble de contrôleur intégré (200) comprend un contrôleur ISG (200a) et un contrôleur EFI (200b) disposés à l'intérieur d'une périphérie dudit ensemble de phares (201),
ledit contrôleur (200, 200a, 200b) ayant une longueur (L), ladite longueur (L) étant orientée latéralement dans une direction latérale du véhicule (100), et une plus grande surface (C) dudit contrôleur (200, 200a, 200b) étant déterminée par une surface projetée (P), ladite plus grande surface (C) dudit contrôleur étant disposée de manière à faire face dans une orientation vers le haut-vers le bas du véhicule (100).

2. Véhicule (100) selon la revendication 1, dans lequel ledit dispositif électrique est monté sur une unité de suspension avant (140) par l'intermédiaire d'un support de suspension avant (204) ;
ladite unité de suspension avant (140) étant fixée de manière rigide audit tube de direction (131) dudit cadre principal (130) ; et
ladite unité de suspension avant (140) étant configurée pour supporter de manière orientable la roue avant (101).

3. Véhicule (100) selon la revendication 1, dans lequel
ledit contrôleur (200, 200a, 200b) présente une ou plusieurs ailettes de refroidissement (601).

4. Véhicule (100) selon la revendication 1, dans lequel ledit contrôleur (200, 200a, 200b) est disposé à proximité dudit ensemble de phares (201).

5. Véhicule (100) selon la revendication 3, dans lequel ledit contrôleur ISG (200a) est disposé sur le côté gauche dudit ensemble de phares (201) et ledit contrôleur EFI (200b) est disposé sur le côté droit dudit ensemble de phares (201) ; et dans lequel ledit contrôleur ISG (200a) et ledit contrôleur EFI (200b) sont disposés à proximité d'un clignotant (202).

6. Véhicule (100) selon la revendication 1, dans lequel ledit contrôleur (200, 200a, 200b) est recouvert par une structure de recouvrement (300) de l'ensemble de phares (201).

7. Véhicule (100) selon la revendication 1, dans lequel ledit contrôleur (200, 200a, 200b) est disposé sur un côté latéral dudit ensemble de phares (201), et un dispositif relais est disposé sur l'autre côté latéral dudit ensemble de phares (201).

8. Véhicule (100) selon la revendication 3, dans lequel
ledit contrôleur (200, 200a, 200b) a une forme de boîte rectangulaire dont la hauteur (H) est inférieure à la longueur (L) et à la largeur (W) dudit ensemble de contrôleur intégré (200).

9. Véhicule (100) selon la revendication 3, dans lequel ledit contrôleur (200, 200a, 200b) présente une surface projetée verticalement (P) égale ou inférieure à une surface projetée (P') dudit ensemble de phares (201),
dans lequel une périphérie de ladite surface projetée (P') dudit ensemble de phares (201) inclut ladite surface projetée (P) dudit contrôleur.

10. Véhicule (100) selon la revendication 3, dans lequel ladite ou lesdites ailettes de refroidissement (601) sont orientées vers le bas.

11. Véhicule (100) selon la revendication 3, dans lequel ledit contrôleur (200, 200a, 200b) est configuré pour être incliné selon un angle prédéterminé par rapport à un axe (AA') d'une unité de suspension avant (140) ;
ledit ensemble de contrôleur intégré (200) étant monté sur un support de suspension avant (204) ;
ladite plus grande surface du contrôleur (200, 200a, 200b) étant sensiblement parallèle audit axe (AA') de ladite unité de suspension avant (140) ; et
ladite ou lesdites ailettes de refroidissement (601) étant orientées vers un panneau avant.

12. Véhicule (100) selon la revendication 3, dans lequel ledit contrôleur (200, 200a, 200b) est connecté à une unité de commande du véhicule par l'intermédiaire d'un coupleur ; et ledit coupleur étant acheminé vers l'arrière du véhicule (100) en passant par ledit tube de direction (131).

13. Véhicule (100) selon la revendication 3, dans lequel ledit contrôleur (200, 200a, 200b) est recouvert d'une structure de recouvrement (300).

14. Véhicule (100) selon la revendication 1, dans lequel :
ledit contrôleur (200, 200a, 200b) comprend un contrôleur ISG (200a) et un contrôleur EFI (200b), ledit contrôleur ISG (200a) étant disposé entre ledit ensemble de phares (201) et la roue avant (101), ledit contrôleur EFI (200b) étant situé sous un ensemble de siège (165) et entre une paire de tubes arrière de châssis (133) et étant adapté pour être disposé sur un filtre à air (133).

15. Véhicule (100) selon la revendication 14, dans lequel
ledit contrôleur ISG (200a) est situé le long d'un axe central (CC') du véhicule (100), et/ou ledit contrôleur EFI (200b) et une batterie (B) sont situés dans une direction latérale en largeur et à proximité d'un axe central (CC') du véhicule (100).

16. Véhicule (100) selon la revendication 14, dans lequel ledit contrôleur ISG (200a) et ledit contrôleur EFI (200b) sont situés à égale distance de la batterie (B), et/ou chevauchent partiellement un axe central (CC') du véhicule (100).

17. Véhicule (100) selon la revendication 14, dans lequel le véhicule (100) est équipé d'un moteur ISG (125) ; et la distance de faisceau de câbles entre ledit contrôleur ISG (200a) et ledit moteur ISG (125) est égale à la distance de faisceau de câbles entre ledit contrôleur EFI (200b) et une unité d'alimentation EFI (120).
